# EUROPEAN PATENT APPLICATION

(11) **EP 4 317 111 A1**
(43) Date of publication of application: **07.02.2024**
(21) Application number: 22780681.7
(22) Date of filing: 28.03.2022
(51) Int. Cl.: C04B 37/00

(54) **METHOD FOR PRODUCING ASSEMBLY**

(30) Priority: 29.03.2021 JP 2021056172
(71) Applicant: Kyocera Corporation, Kyoto-shi Kyoto 612-8501 (JP)
(72) Inventor: HORIUCHI, Masahiko, Kyoto-shi, Kyoto 612-8501 (JP); MANOME, Takeo, Kyoto-shi, Kyoto 612-8501 (JP); MIYAZAKI, Shinya, Kyoto-shi, Kyoto 612-8501 (JP)
(74) Representative: Viering, Jentschura & Partner mbB Patent- und Rechtsanwälte
(86) International application number: PCT/JP2022/014812
(87) International publication number: WO 2022/210470

(57) **Abstract**

A method for manufacturing a bonded body according to the present disclosure includes: obtaining a first composite that includes a first outer layer portion located on an outer surface side and containing silicon oxide as a main component, and a first inner portion surrounded by the first outer layer portion and containing silicon carbide and silicon; obtaining a second composite that includes a second outer layer portion located on an outer surface side and containing silicon oxide as a main component, and a second inner portion surrounded by the second outer layer portion and containing silicon carbide and silicon; grinding or polishing a first contact surface at which the first inner portion is in contact with the second inner portion and/or a second contact surface at which the second inner portion is in contact with the first inner portion; and bringing the first contact surface and the second contact surface into contact with each other and performing thermal treatment in a vacuum atmosphere or an inert gas atmosphere.

## Description

### TECHNICAL FIELD

The present invention relates to a method for manufacturing a bonded body.

### BACKGROUND OF INVENTION

Conventionally, silicon carbide ceramic materials are bonded to each other by using a brazing material as described in Patent Document 1. Specifically, Patent Document 1 describes a method in which, at the time of bonding silicon carbide ceramic materials to each other by using a brazing material containing silicon, an oxide film is formed in advance only on a non-bonding surface of the silicon carbide ceramic material. Even when the silicon carbide ceramic materials are bonded to each other at surfaces including pores or grooves by such a method, the pores or grooves are suppressed from being closed.

### CITATION LIST

### PATENT LITERATURE

Patent Document 1: JP 4954838 B

### SUMMARY

### SOLUTION TO PROBLEM

A method for manufacturing a bonded body according to the present disclosure includes: obtaining a first composite that includes a first outer layer portion located on an outer surface side and containing silicon oxide as a main component, and a first inner portion surrounded by the first outer layer portion and containing silicon carbide and silicon; obtaining a second composite that includes a second outer layer portion located on an outer surface side and containing silicon oxide as a main component, and a second inner portion surrounded by the second outer layer portion and containing silicon carbide and silicon; grinding or polishing a first contact surface at which the first inner portion is in contact with the second inner portion and/or a second contact surface at which the second inner portion is in contact with the first inner portion; and bringing the first contact surface and the second contact surface into contact with each other and performing thermal treatment in a vacuum atmosphere or an inert gas atmosphere.

### BRIEF DESCRIPTION OF THE DRAWINGS

FIG. 1 is an explanatory diagram illustrating a bonded body obtained by a manufacturing method according to one embodiment of the present disclosure.
FIG. 2 is an explanatory diagram illustrating processes of the manufacturing method according to one embodiment of the present disclosure.

### DESCRIPTION OF EMBODIMENTS

Since a brazing material is used in a conventional bonding method as described above, a brazing material layer exists between silicon carbide ceramic materials. As a result, when gaps are present in the brazing material layer, bonding strength decreases. In order to reduce variations in the thickness of the brazing material layer, the particle size distribution of silicon needs to be controlled. When not properly controlled, fluid may leak to the outside. In the conventional bonding method, silicon carbide ceramic materials are bonded to each other by vacuum brazing. Accordingly, carbon contained in the brazing material may scatter and cause a furnace wall to be contaminated.

Therefore, a bonded body having excellent bonding strength and a method for manufacturing a bonded body having excellent bonding strength without contaminating a furnace wall are in demand.

As described above, a method for manufacturing a bonded body according to the present disclosure includes a step of bringing a first contact surface and a second contact surface into contact with each other and performing thermal treatment in a vacuum atmosphere or an inert gas atmosphere. Therefore, according to the present disclosure, the method for manufacturing a bonded body having excellent bonding strength without contaminating a furnace wall can be provided.

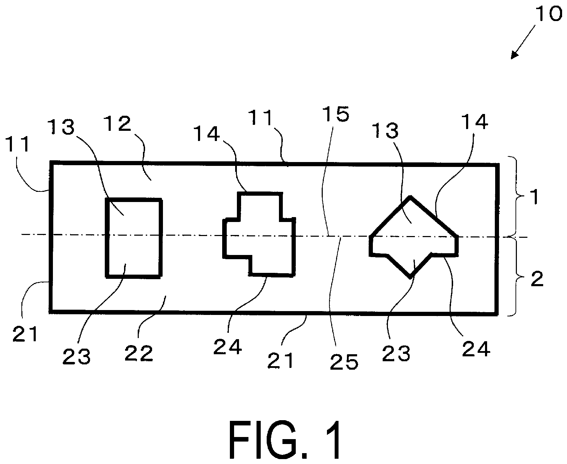

A bonded body obtained by the manufacturing method according to one embodiment of the present disclosure (hereinafter, the bonded body may be referred to as "bonded body according to one embodiment") includes a first composite and a second composite as described above. The bonded body according to the present disclosure will be described with reference to FIG. 1.

As illustrated in FIG. 1, a bonded body 10 according to one embodiment includes a first composite 1 and a second composite 2. The first composite 1 includes a first outer layer portion 11 and a first inner portion 12 surrounded by the first outer layer portion 11. The first outer layer portion 11 is located on the outer surface side of the first composite 1 and contains silicon oxide as a main component. The first outer layer portion 11 is an oxide film containing silicon oxide as a main component, and the thickness thereof is not limited. The first outer layer portion 11 has a thickness of, for example, 700 nm or more and 900 nm or less.

In the present specification, a "main component" means a component that accounts for 80 mass% or more. The component may be identified with an X-ray diffractometer using a CuKα beam, and the contents of silicon carbide and silicon may be determined, for example, by the Rietveld method.

The first inner portion 12 contains silicon carbide and silicon, and is surrounded by the first outer layer portion 11. Specifically, in a member containing silicon carbide and silicon, an oxide film containing silicon oxide as a main component formed by oxidizing the outer surface of the member corresponds to the "first outer layer portion 11" and the remaining portion corresponds to the "first inner portion 12".

The contents of silicon carbide and silicon contained in the first inner portion 12 are not limited. Silicon carbide may be contained at a ratio of, for example, 70 mass% or more and 92 mass% or less. Silicon carbide is superior to silicon in mechanical characteristics such as Young's modulus (dynamic elastic modulus) and three-point bending strength. Therefore, when the content of silicon carbide is 70 mass% or more, the mechanical characteristics of the obtained bonded body are improved. On the other hand, silicon has a thermal conductivity higher than that of silicon carbide. Therefore, when the content of silicon carbide is 92 mass% or less, the thermal conductivity of the obtained bonded body is improved. As a result, when the content of silicon carbide is 70 mass% or more and 92 mass% or less, both mechanical characteristics and thermal conductivity can be achieved.

In the first inner portion 12, the difference between the average value of the distances between centroids of silicon and the average value of the equivalent circle diameters of silicon is not limited and may be, for example, 8 µm or more and 20 µm or less. When the difference is 8 µm or more, the distribution density of silicon carbide is high. Therefore, the rigidity of the obtained bonded body is improved, and variations in rigidity are also reduced. When the difference is 20 µm or less, the thermal conductivity of the obtained bonded body is improved and variations in the thermal conductivity are also reduced.

The closed porosity of the first inner portion 12 is not limited and may be, for example, 0.1% or less. When the closed porosity of the first inner portion 12 is 0.1% or less, the volume of closed pores decreases. Therefore, even when particles are contained in the closed pores in the obtained bonded body, the likelihood of silicon being eroded by the particles decreases.

The second composite 2 includes a second outer layer portion 21 and a second inner portion 22 surrounded by the second outer layer portion 21. The second outer layer portion 21 is located on the outer surface side of the second composite 2 and contains silicon oxide as a main component. The second outer layer portion 21 is an oxide film containing silicon oxide as a main component, and the thickness thereof is not limited. The second outer layer portion 21 has a thickness of, for example, from 700 nm or more and 900 nm or less. The "main component" is as described above, and the detailed description thereof will be omitted.

The second inner portion 22 contains silicon carbide and silicon, and is surrounded by the second outer layer portion 21. Specifically, in a member containing silicon carbide and silicon, an oxide film containing silicon oxide as a main component formed by oxidizing the outer surface of the member corresponds to the "second outer layer portion 21" and the remaining portion corresponds to the "second inner portion 22".

The contents of silicon carbide and silicon contained in the second inner portion 22 are not limited. Silicon carbide may be contained at a ratio of, for example, 70 mass% or more and 92 mass% or less. Silicon carbide is superior to silicon in mechanical characteristics such as Young's modulus (dynamic elastic modulus) and three-point bending strength. Therefore, when the content of silicon carbide is 70 mass% or more, the mechanical characteristics of the obtained bonded body are improved. On the other hand, silicon has a thermal conductivity higher than that of silicon carbide. Therefore, when the content of silicon carbide is 92 mass% or less, the thermal conductivity of the obtained bonded body is improved. As a result, when the content of silicon carbide is 70 mass% or more and 92 mass% or less, both the mechanical characteristics and thermal conductivity can be achieved. The components contained in the first inner portion 21 and the second inner portion 22 may be identified with an X-ray diffractometer, and the contents of silicon carbide and silicon may be determined by the Rietveld method.

In the second inner portion 22, the difference between the average value of the distances between centroids of silicon and the average value of the equivalent circle diameters of silicon is not limited and may be, for example, 8 µm or more and 20 µm or less. When the difference is 8 µm or more, the distribution density of silicon carbide is high. Therefore, the rigidity of the obtained bonded body is improved, and variations in rigidity are also reduced. When the difference is 20 µm or less, the thermal conductivity of the obtained bonded body is improved and variations in thermal conductivity are also reduced.

The distances between centroids of silicon in the first inner portion 21 and the second inner portion 22 may be obtained by the following method. First, a part of each of the first inner portion 21 and the second inner portion 22 is cut out. After cutting out, an average range is selected from a mirror surface obtained by polishing a cross section with use of diamond abrasive grains. Then, a range having each area of 0.191 mm² (horizontal length 351 µm, vertical length 545 µm) is photographed by a scanning electron microscope, and an observation image is obtained.

For this observation image, the distance between centroids of silicon is obtained by a method called a distance between centroids method for dispersivity measurement by using the image analysis software "Azo-kun (ver. 2.52)" (registered trade name, manufactured by Asahi Kasei Engineering Corporation, when the image analysis software "Azo-kun (ver. 2.52)" is described in the following explanation, the software is referred to as an image analysis software manufactured by Asahi Kasei Engineering Cooperation).

As setting conditions of this method, for example, a threshold value, which is an index indicating the contrast of an image, is set to 190 to 195, the brightness is set to bright, the small figure removal area is set to 1 µm², and a noise removal filter is present. A particle analysis method is performed on the above observation image as a target to determine the equivalent circle diameter of silicon. The setting conditions of this method are the same as the setting conditions used in the distance between centroids method.

The closed porosity of the second inner portion 22 is not limited and may be, for example, 0.1% or less. When the closed porosity of the second inner portion 22 is 0.1% or less, the volume of closed pores decreases. Therefore, even when particles are contained in the closed pores in the obtained bonded body, the likelihood of silicon being eroded by the particles decreases. A particle analysis method is performed on the above observation image as a target to determine the equivalent circle diameter of silicon. As setting conditions of this method, for example, a threshold value, which is an index indicating the contrast of an image, is set to 155, the brightness is set to bright, the small figure removal area is set to 1 µm², and a noise removal filter is present.

The first composite 1 and the second composite 2 include the first outer layer portion 11 and the second outer layer portion 21, respectively, and thus the shape stability of the first inner portion 12 and the second inner portion 22 is improved even when the bonded body 10 is exposed to a high temperature condition. This is because the melting point of silicon oxide is higher than the melting point of silicon.

In the bonded body 10 according to one embodiment, a first contact surface 15 where the first inner portion 12 is in contact with the second inner portion 22 and a second contact surface 25 where the second inner portion 22 is in contact with the first inner portion 12 are diffusion-bonded to each other. Diffusion bonding is the bonding of members to each other without the use of an adhesive or the like, in which the members are brought into close contact with each other and the members are bonded to each other by using diffusion of atoms generated between bonding surfaces under a temperature condition equal to or lower than the melting point of the members. In the bonded body 10 according to one embodiment, silicon atoms (Si) are diffused and bonded in the first contact surface 15 and the second contact surface 25.

In the bonded body 10 according to one embodiment, no gap is included between the first contact surface 15 and the second contact surface 25. Since the first contact surface 15 and the second contact surface 25 are diffusion-bonded to each other and no gap is included between the first contact surface 15 and the second contact surface 25, the bonded body 10 has excellent bonding strength. In the bonded body 10, heat exchange between the first inner portion 12 and the second inner portion 22 is easily performed.

"No gap is included between the first contact surface 15 and the second contact surface 25" means that no gap whose maximum length in the thickness direction exceeds 20 µm is included between the first contact surface 15 and the second contact surface 25. Therefore, a case where only fine gaps having a maximum length of 20 µm or less are included also corresponds to "no gap is included". Regarding the gap, for example, a mirror surface obtained by polishing a cross section including the first contact surface 15 and the second contact surface 25 may be observed at about 250-times magnification with a scanning electron microscope. By setting the length of the first contact surface (second contact surface) in the mirror surface to, for example, 0.35 mm, the maximum length of the gap in this length may be measured.

In the bonded body 10 according to one embodiment, the first contact surface 15 may be provided with a first recessed portion 13 extending in the depth direction as illustrated in FIG. 1. Such a first recessed portion 13 is provided, and thus fluid can be supplied into the first recessed portion 13 of the bonded body 10 that has been obtained. The width and depth of the first recessed portion 13 can be appropriately adjusted in accordance with the velocity and viscosity of the fluid. Accordingly, the influence of fillets in the first recessed portion 13 (for example, generation of a turbulent flow of the fluid caused by fillets) is reduced negligibly. As a result, even when the fluid is supplied into the first recessed portion 13, variations in channel resistance can be reduced.

The size and shape of the first recessed portion 13 are not limited and may be appropriately set in accordance with the size of the bonded body 10, the application, the type of fluid to be supplied, or the like. In addition, a through hole (first through hole) may be used instead of the first recessed portion 13.

A first inner layer portion 14 containing silicon oxide as a main component may be provided on an inner wall surface and/or an inner bottom surface of the first recessed portion 13, or on an inner wall surface of the first through hole. When the first inner layer portion 14 such as that described above is provided, the shape stability of the first recessed portion 13 or the first through hole is improved even when the first recessed portion 13 or the first through hole is exposed to a high temperature condition in the bonded body 10 in the same way as or a similar way to the first outer layer portion 11 described above. As described above, this is because the melting point of silicon oxide is higher than the melting point of silicon. The first inner layer portion 14 may have a thickness of, for example, 700 nm or more and 900 nm or less.

In the bonded body 10 according to one embodiment, the second contact surface 25 may be provided with a second recessed portion 23 extending in the depth direction as illustrated in FIG. 1. Such a second recessed portion 23 is provided, and thus fluid can be supplied into the second recessed portion 23 of the bonded body 10 that has been obtained. Even when the fluid is supplied into the second recessed portion 23, variations in channel resistance can be reduced in the same way as or a similar way to the first recessed portion 13.

The size and shape of the second recessed portion 23 are not limited and may be appropriately set in accordance with the size of the bonded body 10, the application, the type of fluid to be supplied, or the like. A through hole (second through hole) may be used instead of the second recessed portion 23.

A second inner layer portion 24 containing silicon oxide as a main component may be provided on an inner wall surface and/or an inner bottom surface of the second recessed portion 23, or on an inner wall surface of the second through hole. The reason is as described for the first recessed portion 13 described above. The second inner layer portion 24 may have a thickness of, for example, 700 nm or more and 900 nm or less.

The first recessed portion 13 (or the first through hole) and the second recessed portion 23 (or the first through hole) may have an identical shape or different shapes. The first recessed portion 13 (or the first through hole) and the second recessed portion 23 (or the first through hole) may be located opposite to each other when the first composite 1 and the second composite 2 are bonded to each other as illustrated in FIG. 1 or may be disposed at different positions.

A method for manufacturing a bonded body according to one embodiment of the present disclosure includes the following steps (a) to (c).
Step (a) is a step of obtaining a first composite that includes a first outer layer portion located on the outer surface side and containing silicon oxide as a main component, and a first inner portion surrounded by the first outer layer portion and containing silicon carbide and silicon.
Step (b) is a step of obtaining a second composite that includes a second outer layer portion located on the outer surface side and containing silicon oxide as a main component, and a second inner portion surrounded by the second outer layer portion and containing silicon carbide and silicon.
Step (c) is a step of grinding or polishing a first contact surface at which the first inner portion is in contact with the second inner portion and/or a second contact surface at which the second inner portion is in contact with the first inner portion.
Step (d) is a step of bringing the first contact surface and the second contact surface into contact with each other and performing thermal treatment in a vacuum atmosphere or an inert gas atmosphere.

Steps (a) and (b) are steps of obtaining a first composite 1 and a second composite 2, respectively. First, 8.7 parts by mass or more and 42.9 parts by mass or less of silicon powder having an average particle diameter of 1 µm or more and 90 µm or less is mixed with 100 parts by mass of α-type silicon carbide powder having an average particle diameter of 40 µm or more and 250 µm or less. Thermosetting resin is added as a molding aid into the obtained mixed powder of α-type silicon carbide and silicon such that the residual carbon rate after degreasing treatment is 10% or more. The average particle diameters of α-type silicon carbide and silicon can be measured by a liquid-phase precipitation method, a light transmission method, a laser diffraction scattering method, or the like.

Examples of the thermosetting resin include, but are not limited to, phenol resin, epoxy resin, furan resin, phenoxy resin, melamine resin, urea resin, aniline resin, unsaturated polyester resin, urethane resin, and methacrylic resin. These resins may be used alone or in a combination of two or more types of resins. In particular, a resol-type or novolac-type phenol resin is preferable as the molding aid from the perspective of low shrinkage after thermal curing.

The higher the purity of the silicon powder, the better. A powder containing silicon in a proportion of 95 mass% or more may be used, and a powder containing silicon in a proportion of 99 mass% or more is preferably used. The shape of the silicon powder to be used is not limited, and may be spherical or a shape close to a spherical shape or may be an irregular shape. The silicon powder is formed into a silicon phase by thermal treatment and crystal particles of silicon carbide are connected thereto.

Then, the mixed raw materials are granulated by using a granulator such as a tumbling granulator, a spray dryer, a compression granulator, or an extruding granulator to obtain granules. In order to obtain granules having a large particle diameter (for example, 0.4 mm or more and 1.6 mm or less), a tumbling granulator may be used. The granulation time is not limited, and granulation is preferably carried out for 30 minutes or more in consideration of crushability of the molded body. The particle diameter of the granules is not limited, and is preferably 0.4 mm or more and 1.6 mm or less and may be 0.5 mm or more and 1.5 mm or less in consideration of crushability and handleability of the molded body.

Then, the obtained granules are molded. Examples of a method for molding the granules include a dry pressing method and a cold isostatic molding method. Pressure at the time of molding is, for example, 78.4 MPa or more and 117.6 MPa or less. The obtained molded body is subjected to thermal treatment at 1460°C or higher and 1500°C or lower in a non-oxidizing atmosphere, and thus a sintered body is obtained. Before thermal treatment, degreasing treatment may be performed at a temperature of 400°C or higher and 600°C or lower in a non-oxidizing atmosphere such as argon, helium, neon, or vacuum according to need.

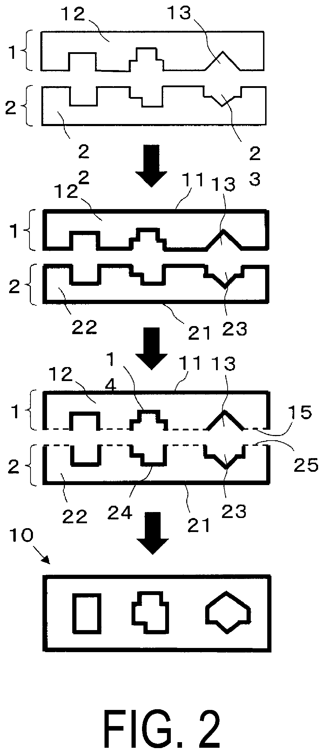

FIG. 2 is an explanatory diagram illustrating processes of the manufacturing method according to one embodiment of the present disclosure. The first recessed portions 13 and the second recessed portions 23 are formed in the sintered body (member) obtained as just described. Thereafter, the member is subjected to oxidation treatment to form an oxide film containing silicon oxide as a main component on the surface of the member. The oxide film corresponds to "the first outer layer portion 11 and the first inner layer portion 14" and "the second outer layer portion 21 and the second inner layer portion 24", and the remaining portion corresponds to "the first inner portion 12" and "the second inner portion 22". The thicknesses of "the first outer layer portion 11 and the first inner layer portion 14" and "the second outer layer portion 21 and the second inner layer portion 24" are as described above. As just described, the first composite 1 and the second composite 2 are obtained.

Step (c) is a step of grinding or polishing the first contact surface 15 of the first composite 1 and/or the second contact surface 25 of the second composite 2. By grinding or polishing the first contact surface 15 and/or the second contact surface 25, adhesiveness at the time of bonding can be improved. As a result, excellent bonding strength is exhibited. In order to improve the bonding strength, both the first contact surface 15 and the second contact surface 25 may be ground or polished.

The method for grinding or polishing is not limited. For example, polishing is performed by grinding, lapping, polishing, or the like.

Step (d) is a step of bringing the first contact surface and the second contact surface into contact with each other and performing thermal treatment. Thermal treatment is performed in a vacuum atmosphere or an inert gas atmosphere. The thermal treatment temperature is, for example, 1100°C or higher and 1650°C or lower. By setting the thermal treatment temperature to 1 100°C or higher, silicon is appropriately melted on the periphery of each of the first contact surface 15 and the second contact surface 25, and thus the first composite 1 and the second composite 2 can be firmly bonded to each other. Since the thermal treatment temperature is not set to 1650°C or lower and portions other than the periphery described above are not melted, the rigidity of each of the first composite 1 and the second composite 2 can be maintained at a high level.

Examples of the inert gas include argon, helium, and neon. The thermal treatment time is appropriately set in accordance with the sizes of the first composite 1 and the second composite 2 and is, for example, 1 minute or more and 180 minutes or less. As just described, in the first composite 1 and the second composite 2, the first contact surface 15 and the second contact surface 25 are diffusion-bonded to each other, and thus the bonded body 10 according to one embodiment is obtained. When the first contact surface 15 and the second contact surface 25 are brought into contact with each other and thermal treatment is performed, pressure may be applied in the thickness direction or only the dead weight of the member located on the upper side may be used.

The bonded body according to the present disclosure is used, for example, as a member to be exposed to a high-temperature environment of 500°C or higher, further 800°C or higher in a heat exchanger. Examples of such a member include a heat exchanger between water and high-temperature gas because of the high strength at high temperature.

### EXAMPLES

Hereinafter, examples of the present invention will be specifically described; however, the present invention is not limited to these examples.

### Example 1

First, a first composite and a second composite were manufactured. Before diffusion bonding, a first contact surface of the first composite and a second contact surface of the second composite were set in advance to be surfaces in the state shown in Table 1. The first contact surface and the second contact surface were brought into contact with each other, and diffusion bonding was performed in a vacuum atmosphere at a thermal treatment temperature of 1350°C to obtain samples.

A mirror surface obtained by polishing a cross section including the first contact surface and the second contact surface of each sample was observed for the presence or absence of gaps at 250-times magnification with a scanning electron microscope. Here, the length of the first contact surface (second contact surface) in the mirror surface was set to 0. 35 mm, and the gap in this length was set as an observation target. A sample in which a gap having a maximum length in the thickness direction of more than 20 µm was observed was evaluated as "present", and other samples were evaluated as "absent". The results are shown in Table 1.

**[Table 1]**

| Sample No. | First composite | Second composite | Gap |
|---|---|---|---|
| 1 | Fired surface | Fired surface | Present |
| 2 | Ground surface | Ground surface | Absent |
| 3 | Polished surface | Ground surface | Absent |
| 4 | Ground surface | Polished surface | Absent |

As shown in Table 1, in sample Nos. 2 to 4, no gap is included between the first contact surface and the second contact surface. That is, gaps having a maximum length in the thickness direction of more than 20 µm are not observed. Therefore, it is clear that good diffusion bonding is attained.

### Example 2

First, samples each including the bonded body of the present embodiment were prepared. The contents of silicon carbide and silicon contained in each sample were adjusted in advance to the values shown in Table 2. Components contained in the first inner portion and the second inner portion of each sample were identified by an X-ray diffractometer, and the content of each of silicon carbide and silicon was obtained by the Rietveld method. The contents of components other than silicon carbide and silicon were determined by a fluorescent X-ray analyzer and the total content was 0.1 mass% or less. The dynamic elastic modulus and thermal conductivity of each sample were measured.

The dynamic elastic modulus was measured by using the ultrasonic pulse method described in JIS R 1602:1995. The sample used in the measurement of the dynamic elastic modulus was a rectangular column having a 10 mm square and a length of 40 mm, and was disposed such that the first contact surface and the second contact surface (both are rectangles each having a length of 40 mm and a width of 10 mm) were disposed to be orthogonal to the pulsed laser light to be irradiated to the sample. The results are shown in Table 2.

The thermal conductivity was measured by using the flash method described in JIS R 1611:2010 (ISO 18755:2005 (MOD)). The sample used in the measurement of the thermal conductivity was a circular disk having a diameter of 10 mm and a thickness of 3 mm, and the first contact surface and the second contact surface (both are circles each having a diameter of 3 mm) were disposed to be orthogonal to the pulsed laser light irradiated to the sample. The results are shown in Table 2.

A mirror surface obtained by polishing a cross-section including the first contact surface and the second contact surface of each sample was observed for the presence or absence of gaps by the same method as that shown in Example 1. It was confirmed that there were no gaps in any of the samples.

**[Table 2]**

| Sample No. | First inner portion | | Second inner portion | | Dynamic elastic modulus (GPa) | Thermal conductivity (W/(moK)) |
|---|---|---|---|---|---|---|
| | Silicon carbide (mass%) | Silicon (mass%) | Silicon carbide (mass%) | Silicon (mass%) | | |
| 5 | 65 | 35 | 65 | 35 | 342 | 244 |
| 6 | 70 | 30 | 65 | 35 | 360 | 241 |
| 7 | 70 | 30 | 70 | 30 | 365 | 238 |
| 8 | 70 | 30 | 81 | 19 | 370 | 234 |
| 9 | 70 | 30 | 92 | 8 | 374 | 225 |
| 10 | 70 | 30 | 97 | 3 | 377 | 221 |
| 11 | 81 | 19 | 65 | 35 | 368 | 236 |
| 12 | 81 | 19 | 70 | 30 | 370 | 234 |
| 13 | 81 | 19 | 81 | 19 | 374 | 225 |
| 14 | 81 | 19 | 92 | 8 | 378 | 216 |
| 15 | 81 | 19 | 97 | 3 | 382 | 213 |
| 16 | 92 | 8 | 65 | 35 | 372 | 230 |
| 17 | 92 | 8 | 70 | 30 | 374 | 225 |
| 18 | 92 | 8 | 81 | 19 | 378 | 216 |
| 19 | 92 | 8 | 92 | 8 | 388 | 210 |
| 20 | 97 | 3 | 97 | 3 | 393 | 200 |

As shown in Table 2, in sample Nos. 6 to 19, the content of silicon carbide in the first inner portion and/or the second inner portion is 70 mass% or more and 92 mass% or less. Therefore, it is clear that both a high dynamic elastic modulus and a high thermal conductivity are provided.

### Example 3

First, samples each including the bonded body of the present embodiment were prepared. The contents of silicon carbide and silicon contained in each sample were adjusted to 81 mass% and 19 mass%, respectively. Here, pressure used for molding in order to obtain the first inner portion and the second inner portion is shown as molding pressure in Table 3. A mirror surface obtained by polishing a cross section including the first contact surface and the second contact surface of each sample was observed for the presence or absence of gaps by the same method as that shown in Example 1. As a result, it was confirmed that there were no gaps in any of the samples.

The dynamic elastic modulus, three-point bending strength, and thermal conductivity of each sample were measured in the same manner as described in Example 1. The results are shown in Table 3.

The distances between centroids of silicon in the first inner portion and second inner portion of each sample were obtained by the following method. First, samples including the first inner portion and the second inner portion were cut out separately, the average range was selected from a mirror surface obtained by polishing a cross section of the sample by using diamond abrasive grains, and a range in which each area was 0. 191 mm² (a horizontal length of 351 µm and a vertical length of 545 µm) was photographed by a CCD camera to obtain an observation image.

For this observation image, the distance between centroids of silicon was obtained by a method called a distance between centroids method for dispersivity measurement by using the image analysis software "Azo-kun (ver. 2.52)" (trade name, manufactured by Asahi Kasei Engineering Corporation). As setting conditions of this method, for example, a threshold value, which is an index indicating the contrast of an image, is set to 190, the brightness is set to bright, the small figure removal area is set to 1 µm², and a noise removal filter is present.

A particle analysis method is performed on the above observation image as a target to determine the equivalent circle diameter of silicon. As setting conditions of this method, for example, a threshold value, which is an index indicating the contrast of an image, is set to 195, the brightness is set to bright, the small figure removal area is set to 1 µm², and a noise removal filter is present. The average value of the distances between centroids of silicon and the average value of the equivalent circle diameters were calculated, and the value obtained by subtracting the average value of the equivalent circle diameters from the average value of the distances between centroids of silicon is shown in Table 3 as a silicon-to-silicon interval.

**[Table 3]**

| Sample No. | Molding pressure (MPa) | | Silicon-to-silicon interval (µm) | | Dynamic elastic modulus (GPa) | Thermal conductivity (W/(m·K)) |
|---|---|---|---|---|---|---|
| | First inner portion | Second inner portion | First inner portion | Second inner portion | | |
| 21 | 117.6 | 117.6 | 5 | 5 | 355 | 230 |
| 22 | 123.3 | 117.6 | 8 | 5 | 362 | 230 |
| 23 | 123.3 | 123.3 | 8 | 8 | 362 | 229 |
| 24 | 123.3 | 136.7 | 8 | 15 | 364 | 227 |
| 25 | 123.3 | 146.2 | 8 | 20 | 365 | 227 |
| 26 | 123.3 | 155.8 | 8 | 25 | 366 | 226 |
| 27 | 132.9 | 117.6 | 13 | 5 | 372 | 227 |
| 28 | 132.9 | 123.3 | 13 | 8 | 373 | 226 |
| 29 | 132.9 | 136.7 | 13 | 15 | 373 | 225 |
| 30 | 132.9 | 146.2 | 13 | 20 | 375 | 225 |
| 31 | 132.9 | 155.8 | 13 | 25 | 376 | 223 |
| 32 | 146.2 | 117.6 | 20 | 5 | 377 | 222 |
| 33 | 146.2 | 123.3 | 20 | 8 | 378 | 221 |
| 34 | 146.2 | 136.7 | 20 | 15 | 379 | 220 |
| 35 | 146.2 | 146.2 | 20 | 20 | 380 | 219 |
| 36 | 78.4 | 78.4 | 25 | 25 | 383 | 218 |

As shown in Table 3, in Sample Nos. 22 to 35, the silicon-to-silicon interval in the first inner portion and/or the second inner portion is 8 µm or more and 20 µm or less. Therefore, it is clear that both a high dynamic elastic modulus and a high thermal conductivity are provided and that variations in rigidity and thermal conductivity are small.

### REFERENCE SIGNS

10 Bonded body
1 First composite
11 First outer layer portion
12 First inner portion
13 First recessed portion
14 First inner layer portion
15 First contact surface
2 Second composite
21 Second outer layer portion
22 Second inner portion
23 Second recessed portion
24 Second inner layer portion
25 Second contact surface

## Claims

1. A method for manufacturing a bonded body, comprising:
obtaining a first composite that comprises a first outer layer portion located on an outer surface side and containing silicon oxide as a main component, and a first inner portion surrounded by the first outer layer portion and containing silicon carbide and silicon;
obtaining a second composite that comprises a second outer layer portion located on an outer surface side and containing silicon oxide as a main component, and a second inner portion surrounded by the second outer layer portion and containing silicon carbide and silicon;
grinding or polishing a first contact surface at which the first inner portion is in contact with the second inner portion and/or a second contact surface at which the second inner portion is in contact with the first inner portion; and
bringing the first contact surface and the second contact surface into contact with each other and performing thermal treatment in a vacuum atmosphere or an inert gas atmosphere.

2. The method for manufacturing a bonded body according to claim 1, wherein
the first contact surface comprises a first recessed portion or a first through hole extending in a depth direction.

3. The method for manufacturing a bonded body according to claim 2, wherein
the first composite comprises a first inner layer portion containing silicon oxide as a main component on an inner wall surface and/or an inner bottom surface of the first recessed portion, or on an inner wall surface of the first through hole.

4. The method for manufacturing a bonded body according to any one of claims 1 to 3, wherein
the second contact surface comprises a second recessed portion or a second through hole extending in a depth direction.

5. The method for manufacturing a bonded body according to claim 4, wherein
the second composite comprises a second inner layer portion containing silicon oxide as a main component on an inner wall surface and/or an inner bottom surface of the second recessed portion, or on an inner wall surface of the second through hole.

6. The method for manufacturing a bonded body according to any one of claims 1 to 5, wherein
a content of silicon carbide in the first inner portion and/or the second inner portion is 70 mass% or more and 92 mass% or less.

7. The method for manufacturing a bonded body according to any one of claims 1 to 6, wherein
in the first inner portion and/or the second inner portion, a difference between an average value of distances between centroids of silicon and an average value of equivalent circle diameters of silicon is 8 µm or more and 20 µm or less.

8. The method for manufacturing a bonded body according to any one of claims 1 to 7, wherein
a closed porosity of the first inner portion and/or the second inner portion is 0.1% or less.
